# DEMANDE DE BREVET EUROPEEN

(11) **EP 1 611 966 A1**
(43) Date de publication de la demande: **04.01.2006**
(21) Numéro de dépôt: 04015197.9
(22) Date de dépôt: 29.06.2004
(51) Int. Cl.: B08B 11/02, B65G 49/06, C03B 35/20

(54) **Dispositif de support de vitre pour le traitement des vitres destinées à former les fenêtres de communication des appareils de communication**

(71) Demandeur: SPECIAL COATING LABORATORY INTERNATIONAL (S.C.L. INTERNATIONAL) S.A.R.L., 74160 Archamps (FR)
(72) Inventeur: Gehrig, Jean, 74580 Viry (FR); Gehrig, Denis, 74160 Saint Julien En Genevois (FR)
(74) Mandataire: Arbousse-Bastide, Jean-Claude Ph.

(57) **Abrégé**

Dispositif de support de vitres (3) pour le traitement des vitres destinées à former les fenêtres de communication des appareils de communication tels que par exemple les téléphones portables ou les écrans des ordinateurs.

Il est constitué d'un axe horizontal (1) destiné à maintenir une vitre (3) pour son trempage dans un bain de traitement, lequel axe (1) porte d'une part des moyens de maintien en suspension (2) de la vitre (3) et d'autre part des moyens de maintien (4) empêchant le balancement de ladite vitre (3) et son inclinaison.

## Description

La présente invention a pour objet un dispositif de support de vitre pour le traitement des vitres destinées à former les fenêtres de communication des appareils de communication tels que par exemple les téléphones portables ou les écrans d'ordinateurs.

L'une des étapes du processus de traitement de telles vitres réalisées à partir d'une matière plastique consiste à plonger lesdites vitres dans un bain contenant de l'eau et des détergents à une température de l'ordre de 50 à 60°C. Actuellement, l'opération qui consiste à descendre une vitre dans un tel bain de traitement est effectuée manuellement et doit être réalisée avec dextérité pour maintenir la vitre verticalement et sans balancement. Celle-ci est ensuite découpée en morceaux de dimensions adaptées aux fenêtres des appareils de communications.

La présente invention propose un dispositif de support de vitre permettant une exécution automatique de l'opération de descente d'une vitre dans un bain de traitement tout en offrant un maintien vertical et stable de la vitre, sans inclinaison tout au long de sa descente et de son trempage.

Le dispositif de support de vitre de communication selon la présente invention se caractérise essentiellement en ce qu'il est constitué d'un axe horizontal destiné à maintenir une vitre de communication pour son trempage dans un bain de traitement, lequel axe porte d'une part des moyens de maintien en suspension de la vitre et d'autre part des moyens de maintien empêchant le balancement de ladite vitre et son inclinaison.

Dans un mode de réalisation préférentielle de la présente invention l'axe de maintien de la vitre comprend d'une part un support central comportant des moyens de maintien aptes à serrer étroitement l'un des bords de la vitre au niveau de son axe médian pour son maintien en suspension et d'autre part deux supports latéraux situés de part et d'autre dudit support central et comportant des moyens de pincement dudit bord supérieur de la vitre ayant pour fonction d'empêcher le balancement de la vitre et son inclinaison tout en permettant à l'écran de se dilater sans déformation ou voilage.

Le support central comprendra essentiellement une surface plane et un rouleau de maintien susceptible de serrer étroitement la partie médiane du bord supérieur de la vitre contre ladite surface plane, lequel rouleau étant disposé dans un logement comportant un moyen élastique exerçant une force de rappel sur le rouleau perpendiculaire à la surface plane de manière à permettre le pincement dudit bord supérieur entre le rouleau et cette dernière.

Le support comprendra des moyens permettant, dans le cas où la vitre subit une contrainte de traction, vers le bas d'augmenter la force de serrage du rouleau de maintien de manière à empêcher le décrochement de ladite vitre. Dans une forme de réalisation préférentielle du dispositif selon la présente invention le logement dans lequel est disposé le rouleau de pincement et le moyen élastique seront adaptés pour autoriser une mobilité verticale dudit rouleau lui permettant, dans le cas où la vitre subit une force de traction vers le bas, de suivre ladite vitre tout en augmentant la pression de serrage grâce audit moyen élastique.

Un support latéral comprendra une partie plane verticale contre laquelle sera plaqué le bord supérieur de ladite vitre au moyen d'un ressort se présentant plus particulièrement sous la forme d'une tige métallique permettant également à ladite vitre de se dilater sans risque de déformation ou de voilage.

Les avantages et les caractéristiques de la présente invention ressortiront plus clairement de la description qui suit et qui se rapporte au dessin annexé, lequel en représente plusieurs modes de réalisation non limitatifs.
- la figure 1 représente une vue de dessus du dispositif selon la présente invention
- la figure 3 représente une vue de profil de la pièce de maintien centrale du dispositif selon la présente invention.
- la figure 4 représente une vue de profil d'une pièce latérale du dispositif de support selon la présente invention.

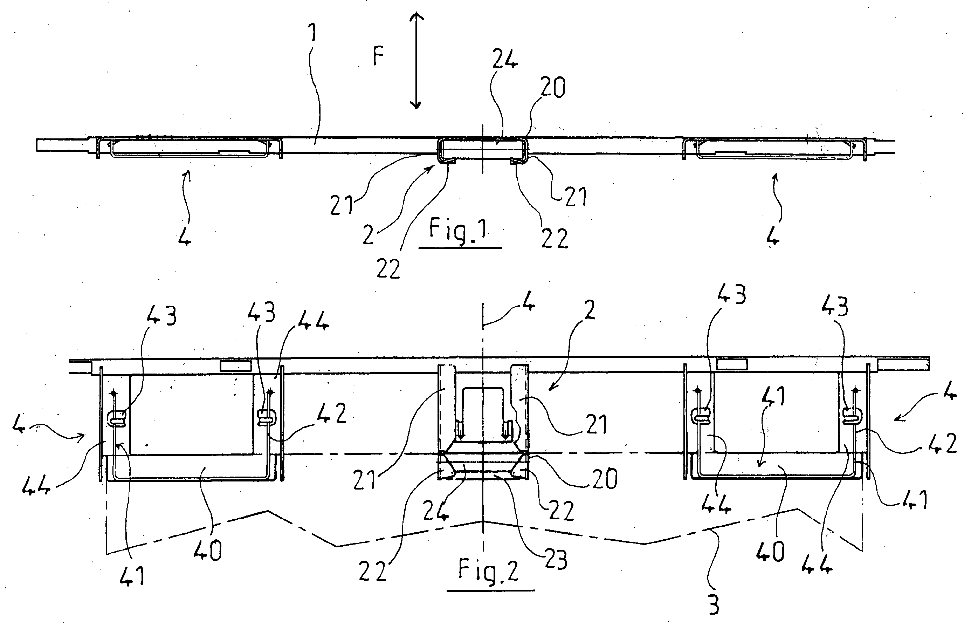

Si on se réfère à la figure 1 et à la figure 2 on peut voir qu'un dispositif porte vitre selon la présente invention comprend un axe support 1 portant d'une part un support central 2 destiné à maintenir en position de suspension une vitre 3, réalisée à partir d'une matière plastique, destinée à former la fenêtre d'un appareil de communication tel que par exemple un téléphone portable ou un écran d'ordinateur et d'autre part deux supports latéraux 4 empêchant le balancement de la vitre 3 dans le sens indiqué par F et son inclinaison.

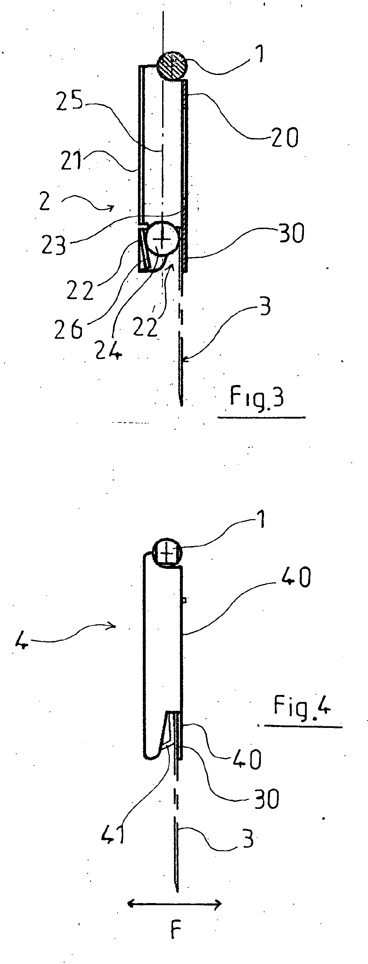

Le support central 2, comme on peut le voir également à la figure 3, est constitué d'une pièce métallique plate 20 dont les côtés longitudinaux 21 sont pliés en forme de U et sont découpés à l'une de leur extrémité de manière à former chacun une ailette 22 rabattue vers l'intérieur pour définir un espace 22' avec le fond 23 de la pièce 20 dans lequel est disposé, perpendiculairement à l'axe longitudinal de cette dernière, un rouleau 24 parallèle à l'axe support 1.

Le rouleau 24 vient pincer, sous l'effet de l'élasticité de l'ailette 22, exerçant une force de rappel dans une direction normale au fond 23, l'un des bords 30 de la vitre 3 en sa partie médiane, pour la maintenir en suspension en vue de son traitement par trempage dans un bain d'eau et de détergents, non représenté.

L'espace 22' est adapté de manière à permettre un déplacement vertical du rouleau 24 par exemple lorsque la vitre 3 est soumise à une contrainte la tirant vers le bas, après son positionnement en suspension dans le support central 2, entraînant avec elle le rouleau 24 vers le bas dans le sens de l'axe longitudinale 25 de la pièce centrale 2. D'autre part on peut voir sur la figure 3 que les ailettes 22 sont rabattues vers l'intérieur en étant légèrement inclinées de manière à former une rampe élastique 26 réduisant progressivement l'espace 22' situé entre ces dernières et le fond 23 vers leur extrémité libre inférieure, ce qui a pour effet d'augmenter la pression de serrage du rouleau 24 lorsque celui-ci est entraîné vers le bas par la vitre 3 et d'empêcher ce dernier de se décrocher du support 1.

Un support latéral 4 est constitué d'une plaque formant un fond vertical 40 contre lequel vient en appui le bord 30 supérieur de la vitre 3 ainsi suspendue et une tige ressort 41 destinée à pincer le bord supérieur 30 pour maintenir la vitre 3 latéralement de part et d'autre de l'axe médian du bord supérieur 3, lequel maintien a pour fonction d'empêcher le balancement de la vitre 3 dans le sens de F et son inclinaison. En outre la tige 41 permet à la vitre 3, de part sa structure et sa force de pincement, de se dilater sans risque de déformation.

La tige ressort 41 est pliée en forme de U et ses branches 42 sont solidarisées au fond 40 du support latéral 4 grâce à des pattes de fixation 43 situées sur les côtés longitudinaux 44 du fond 40 tandis que la base du U vient pincer le bord supérieur de la vitre 3.

Le dispositif de support de vitre selon la présente invention permet une exécution automatique des phases de descente et de trempage des vitres en vue de leur traitement avec un maintien droit de la vitre tout en permettant sa dilatation sans risque de déformation et de voilage.

## Revendications

1. Dispositif de support de vitre pour le traitement des vitres (3) destinées à former les fenêtres de communication des appareils de communication tels que par exemple les téléphones portables ou les écrans des ordinateurs **caractérisé en ce qu'**il est constitué d'un axe horizontal (1) destiné à maintenir une vitre (3) pour son trempage dans un bain de traitement, lequel axe (1) porte d'une part des moyens de maintien en suspension (2) de la vitre (3) et d'autre part des moyens de maintien (4) empêchant le balancement de ladite vitre (3) et son inclinaison.

2. Dispositif de support de vitre (3) selon la revendication 1 **caractérisé en ce que** l'axe (1) de maintien de la vitre (3) comprend d'une part un support central (2) comportant des moyens de maintien (22,23,24) permettant de serrer étroitement l'un des bords (30) de la vitre (3), au niveau de son axe médian, pour son maintien en suspension et d'autre part deux supports latéraux (4) comportant des moyens de pincement (40,41) dudit bord (30) supérieur de la vitre (3) suspendue ayant pour effet d'empêcher le balancement de la vitre (3) et son inclinaison tout en permettant à cette dernière de se dilater.

3. Dispositif de support de vitre (3) selon la revendication 2 **caractérisé en ce que** le support central (2) comprend une surface plane (20) et un rouleau de maintien (24) permettant de serrer étroitement la partie médiane du bord (30) supérieur de la vitre (3) contre ladite surface plane (20), lequel rouleau (24) étant disposé dans un logement comportant un moyen élastique (22) exerçant une force de rappel sur le rouleau (24) perpendiculaire à ladite surface plane (20) de manière à permettre le pincement dudit bord (30) supérieur.

4. Dispositif de support de vitre (3) selon la revendication 3 **caractérisé en ce que** le support central (2) est constitué d'une pièce métallique plate (20) dont les côtés longitudinaux (21) sont pliés en forme de U et sont découpés à l'une de leur extrémité de manière à former chacun un volet (22) rabattue vers l'intérieur et définissant avec la surface plane (23) de la pièce (20) dudit support central (2) un logement (22') pour le rouleau (24).

5. Dispositif de support de vitre (3) selon la revendication 4 **caractérisé en ce que** le support central (2) comprend des moyens (22) permettant, dans le cas où la vitre (3) subit une contrainte de traction, vers le bas d'augmenter la force de serrage du rouleau (24) de manière à empêcher le décrochement de ladite vitre (3).

6. Dispositif de support de vitre (3) selon la revendication 5 **caractérisé en ce que** le logement (22') dans lequel est disposé le rouleau de maintien (24) et le moyen élastique (22) sont adaptés pour autoriser une mobilité verticale dudit rouleau (24) lui permettant, dans le cas où la vitre (3) subit une force de traction vers le bas, de suivre ladite vitre (3) tout en augmentant la pression de serrage grâce audit moyen élastique (22).

7. Dispositif de support de vitre (3) selon la revendication 6 **caractérisé en ce que** le logement (22') est adapté pour permettre un déplacement du rouleau (24) dans ledit logement parallèlement à l'axe longitudinale (25) du support central (2) et **en ce que** les volets (22) sont inclinés de manière à former une rampe élastique (26) permettant d'augmenter la pression de serrage du rouleau (24) lorsque celui-ci est déplacé vers l'extrémité inférieure desdits volets (22).

8. Dispositif de support de vitre (3) selon l'une quelconque des revendications 2 à 7 **caractérisé en ce qu'**un support latéral (4) comprend une partie plane (40) contre laquelle est plaqué le bord (30) supérieur de la vitre (3) au moyen d'un ressort se présentant plus particulièrement sous la forme d'une tige métallique (41).
